# EUROPEAN PATENT SPECIFICATION

(11) **EP 4 455 037 B1**
(45) Date of publication and mention of the grant of the patent: **07.05.2025**
(21) Application number: 24170646.4
(22) Date of filing: 16.04.2024
(51) Int. Cl.: B65B 59/00, B65B 59/04, B65G 19/02, B65G 19/22, F16B 5/02, B65G 54/02

(54) **APPARATUS FOR PERFORMING A PROCESSING OPERATION ON AN OBJECT**
VORRICHTUNG ZUR DURCHFÜHRUNG EINER VERARBEITUNGSOPERATION AN EINEM OBJEKT
APPAREIL POUR EFFECTUER UNE OPÉRATION DE TRAITEMENT SUR UN OBJET

(30) Priority: 21.04.2023 IT 202300007875
(43) Date of publication of application: 30.10.2024
(73) Proprietor: G. Mondini SpA, 25033 Cologne (BS) (IT)
(72) Inventor: MONDINI, Paolo Carlo, 25033 Cologne (BS) (IT); SURACE, Alfonso, 25038 Rovato (BS) (IT); BIGNOTTI, Vanni, 24060 Castelli Calepio (BG) (IT); CHIARI, Patrizio, 25033 Cologne (BS) (IT)
(74) Representative: Ponchiroli, Simone

(56) References cited:
- DE-A1- 102005 006 782
- US-B2- 10 829 307
- US-B2- 7 073 308

## Description

This invention relates to an apparatus for performing a processing operation on an object. In particular, this invention relates to an apparatus for performing a processing operation on an object which may be constituted of a product, and more specifically a food product, or of a support, and more specifically a support which is intended to be part of a pack and which may contain a product inside it. Indeed this invention is advantageously applied in an apparatus for performing at least one step of a process linked to packaging of a product in a container or on a tray.

Document US 10 829 307 B2 discloses a conveying device for transporting material.

In more detail, this invention relates to an apparatus for performing a processing operation on objects, wherein the objects are moved by a conveying device and wherein the processing operation takes place while the objects are supported by that conveying device. Above all, this invention is advantageously applied in apparatuses in which the conveying device has a linear motor or planar motor.

Apparatuses of this type in the prior art usually comprise a conveying device and a supporting element, with the latter moved by the conveying device along a movement path and defining a housing for housing the object on which the processing operation must be performed. Moreover, the prior art apparatuses comprise a processing unit, which is associated with the movement path. In turn, the processing unit comprises a processing device, which is configured to perform the processing operation when the supporting element is placed at the processing unit, and at least one contact element, which defines a contact for supporting the supporting element when the processing device performs the processing operation on the object placed in the housing, in such a way that the stresses caused by the processing unit are discharged onto the contact element rather than onto the conveying device.

In general, the contact elements must be extremely precisely adjusted (for example, precise to hundredths of a millimetre) to allow correct operation of the apparatus. In particular, in many cases it is necessary to guarantee that the relatively large contact elements have a high degree of planarity. Indeed, in some apparatuses, the supporting element may slide on the contact element and suboptimal adjustment of the contact elements could create problems with movement or with wear.

As may easily be inferred, such precise adjustment requires a lot of time and patience from installers.

The main problem of the prior art apparatuses is linked to the fact that the contact elements are usually positioned very close to the conveying device and, once mounted on the apparatus, they constitute a hindrance to access by operators to the working area for any maintenance, mounting or demounting of the conveying device or of the entire apparatus.

At the same time, if in order to have free access to the area so as to perform maintenance, mounting or demounting operations, operators must remove the contact elements, at the moment of remounting them they are forced to again perform the entire calibration procedure so as to restore their position with the required precision.

In this context the technical purpose which forms the basis of this invention is to provide an apparatus for performing a processing operation on an object which at least partly overcomes the above-mentioned disadvantages.

In particular, the technical purpose of this invention is to provide an apparatus for performing a processing operation on an object, wherein the presence of the contact elements is less of a hindrance to performing maintenance, mounting or demounting operations than is the case in prior art apparatuses. The technical purpose specified and the aims indicated are substantially achieved by an apparatus for performing a processing operation on an object, as defined in independent claim 1. Particular embodiments of this invention are defined in the corresponding dependent claims.

Further features and the advantages of this invention will be more apparent from the detailed description of several preferred, non-limiting embodiments of an apparatus for performing a processing operation on an object, illustrated in the accompanying drawings, in which:
- Figure 1 is an axonometric view from a first viewpoint, of an example of an apparatus made in accordance with this invention with some parts cut away to better illustrate others (in particular without supporting elements);

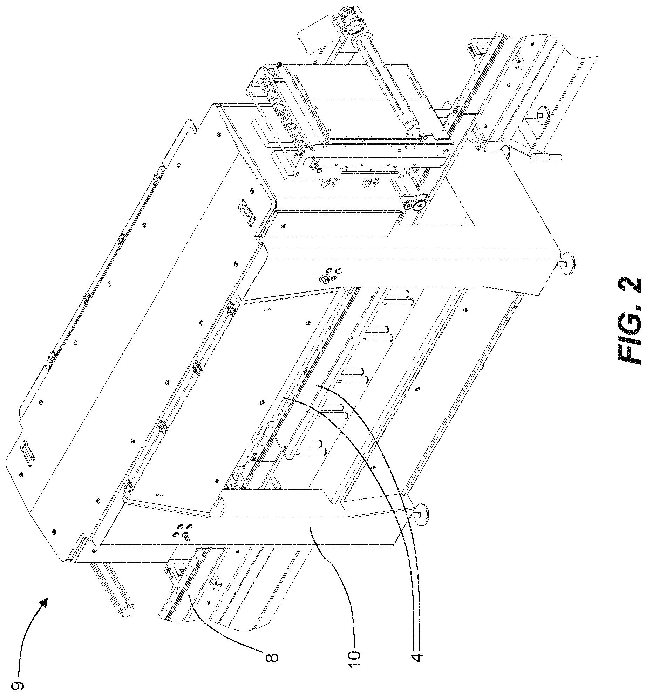

- Figure 2 is an enlarged view of a part of the apparatus of Figure 1, in which a processing unit for processing objects is present;

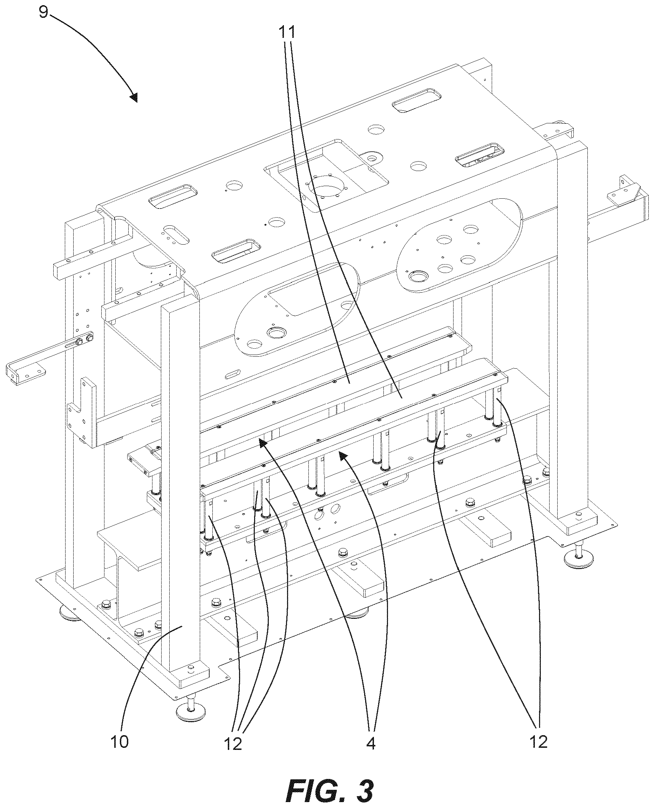

- Figure 3 is an axonometric view from a second viewpoint, of several parts of the processing unit visible in Figure 2;

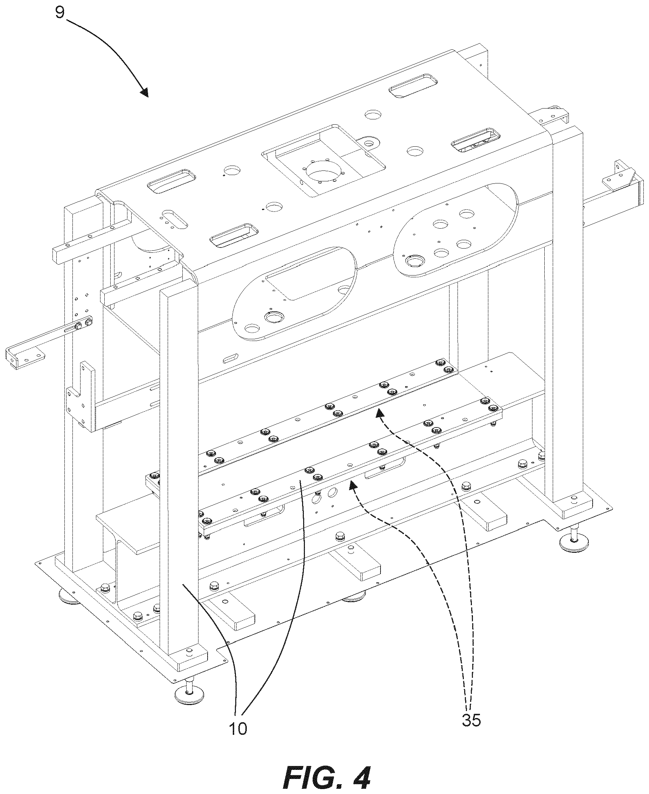

- Figure 4 is an axonometric view from the second viewpoint, of the processing unit of Figure 3 with a pair of contact elements removed;

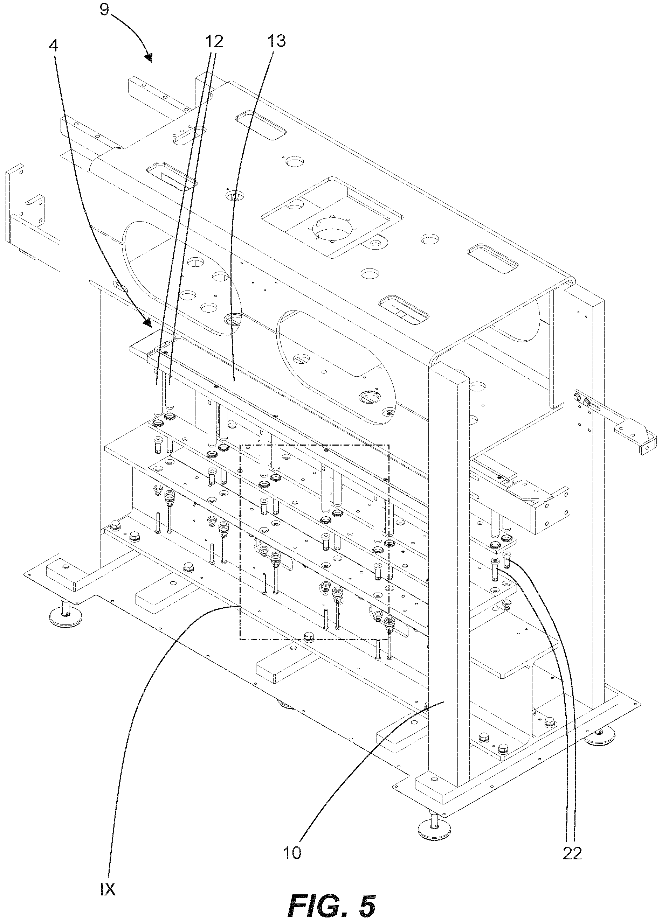

- Figure 5 is an axonometric view from the first viewpoint, of the processing unit of Figure 3 with some components seen in an exploded form;
- Figure 6 is a front view of the processing unit of Figure 3;
- Figure 7 is a side view vertical section, of the processing unit of Figure 6 sectioned according to the section line VII - VII;

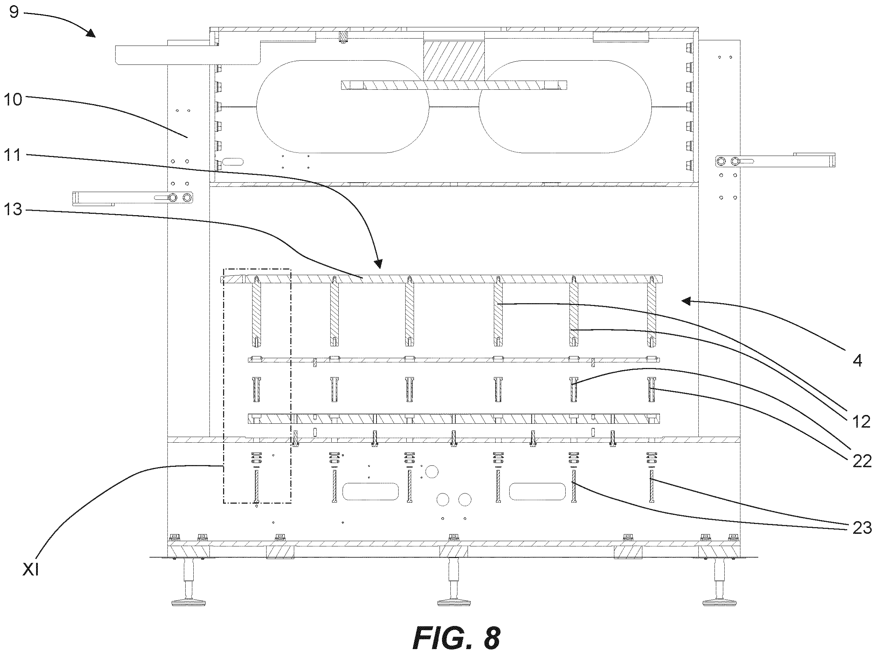

- Figure 8 shows the processing unit of Figure 7 with some components seen in an exploded form;

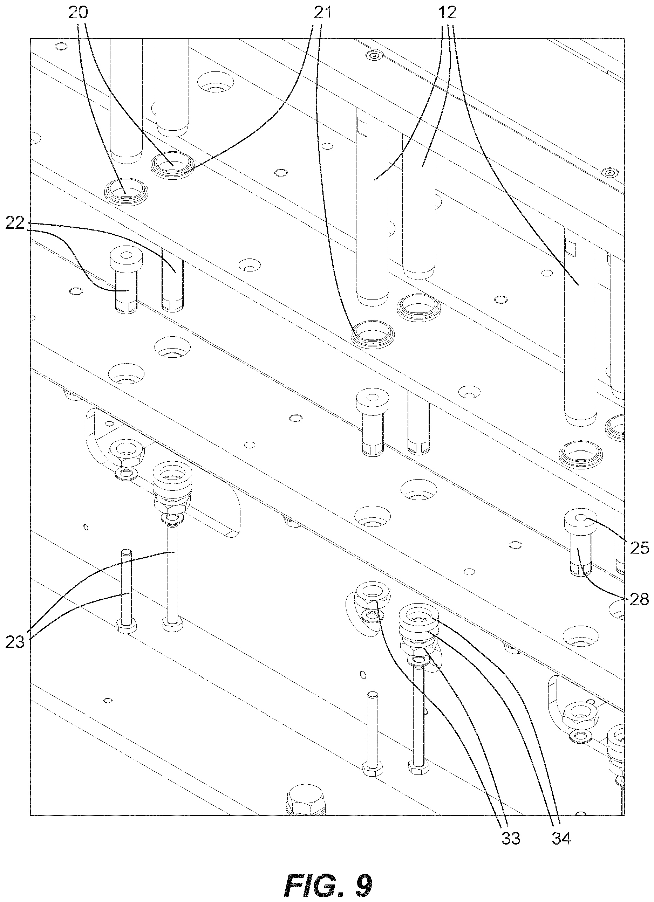

- Figure 9 is an enlarged view of the detail IX of Figure 5;
- Figure 10 is an enlarged view of the detail X of Figure 7;
- Figure 11 is an enlarged view of the detail XI of Figure 8; and

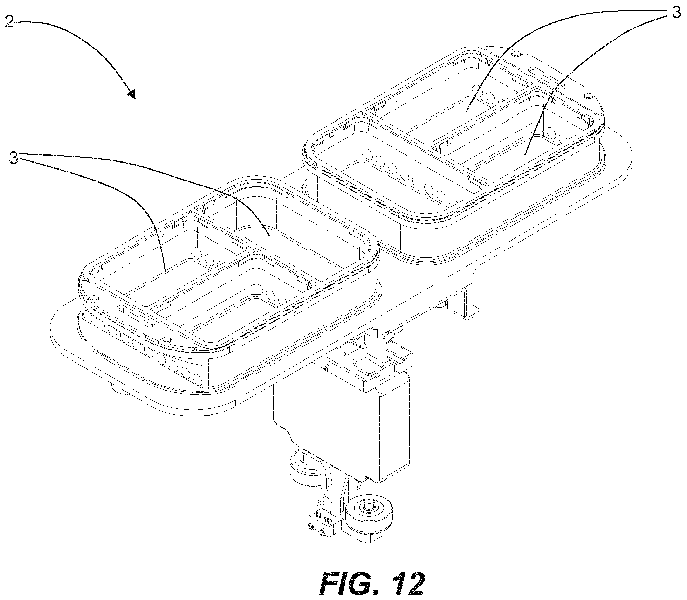

- Figure 12 is an axonometric view of an example of a supporting element associable in use with the conveying device which is part of the apparatus visible in Figure 1.

With reference to the above-mentioned figures the reference number 1 denotes in its entirety an apparatus for performing a processing operation on an object in accordance with this invention.

This invention relates to an apparatus 1 for performing a processing operation on an object, where the object may be of any type. In particular, the apparatus 1 according to this invention is advantageously an apparatus 1 for performing a processing operation on an object which may be either a product, for example a food product, or may comprise a support, intended to constitute part of a pack for packaging a product.

In the embodiment illustrated in the accompanying figures, the apparatus 1 is an apparatus 1 for sealing with an upper film a tray in which a product is present. Indeed, in general, this invention is advantageously applied in the case in which the object comprises a container or a tray and in which the processing operation is a step of a process for packaging of a product in the container or on the tray.

However, the type of processing operation performed by the apparatus 1 is not binding for this invention and may be of any type.

This invention was developed with reference to an apparatus 1 comprising a supporting element 2, which defines a housing 3 for housing the object and which must be supported while the processing operation is performed on the object. For that purpose, the apparatus 1 comprises at least one contact element 4 which supports the supporting element 2 while the processing operation is performed.

Apparatuses 1 of this type may be, for example, an apparatus for thermoforming a plastic film on a support which had previously been inserted into the housing, or an apparatus for forming the support in the housing, or an apparatus for inserting a product in a support which had previously been inserted into the housing.

Proceeding with the description of the apparatus 1 according to this invention, similarly to the prior art apparatuses, it comprises first a supporting frame 5, which is preferably configured to support at least some of the components of the apparatus 1 which will be described below.

Secondly, the apparatus 1 also comprises a conveying device 6 and the supporting element 2 previously introduced.

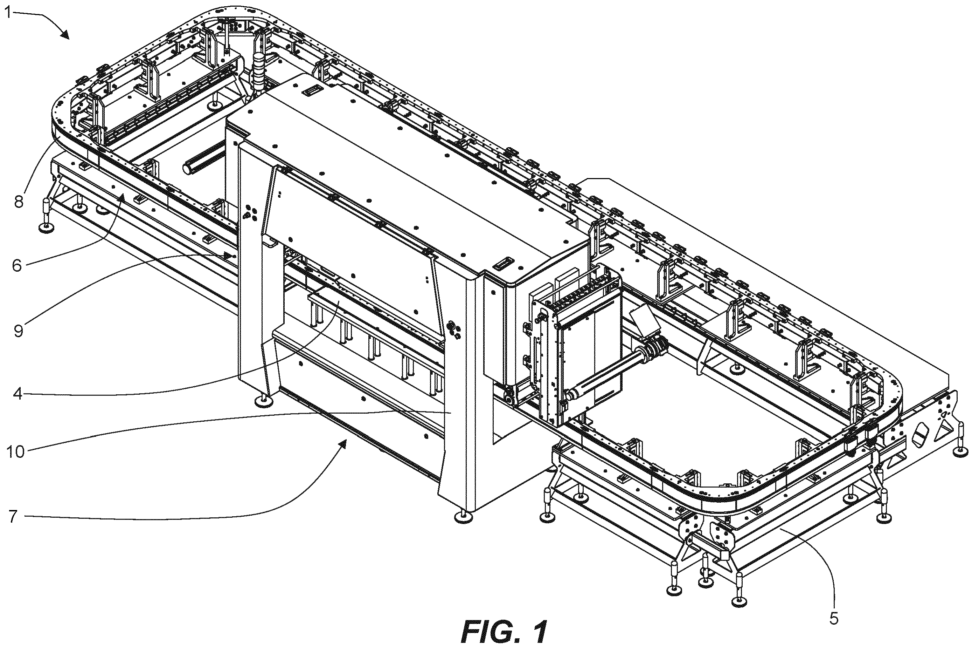

The conveying device 6 defines a movement path, not shown in the accompanying figures, along which a processing station 7 is located and which preferably extends from an infeed station to an outfeed station. The movement path may be any type of path, that is to say, either open (solution not illustrated) or closed (solution illustrated in Figure 1 where the infeed and outfeed stations are not highlighted). Hereinafter in the description reference will be made to an embodiment in which a single processing station 7 is located along the movement path. However, it is possible that multiple processing stations 7 are located along the movement path, which may perform the same type of processing operation, or different processing operations (or on different objects).

In the preferred embodiments, the conveying device 6 comprises a guide 8, which is advantageously constituted of a guide with linear motors. The aspects strictly linked to operation of a guide with linear motors are in themselves known to an expert in the sector and will not be described in detail.

However, it should be emphasised that the type of conveying device 6 shall not be understood as limiting for this invention, since it is possible that it is a conveying device 6 of any type.

The supporting element 2 is coupled to the conveying device 6 and is moved by the same conveying device 6, along the movement path, relative to the supporting frame 5. Moreover, the supporting element 2 defines the housing 3 which is configured to house the object.

In the preferred embodiments, in which the conveying device 6 comprises a guide 8, the supporting element 2 is slidably mounted on the guide 8 and is slidable on the guide 8 along the movement path. In the case in which the guide 8 is constituted of a guide with linear motors, the supporting element 2 is fixed to a carriage of the guide 8 with linear motors and is moved along the movement path by the linear motors of the guide 8.

Finally, the apparatus 1 comprises a processing unit 9 which is associated with the movement path, and is placed at the processing station 7. Advantageously, if there is more than one, at each processing station 7 a respective processing unit 9 is placed.

The following is a detailed description of that processing unit 9, with reference to the embodiment shown in the accompanying figures.

First, the processing unit 9 comprises a supporting structure 10. In the preferred embodiment, the supporting structure 10 is a component separate and different from the supporting frame 5. In these embodiments it is possible to move the processing unit 9 relative to the supporting frame 5 (for example, to substitute a processing unit 9 which performs a first type of processing operation with a processing unit 9 which performs a second type of processing operation). In contrast, in other embodiments, the supporting structure 10 is part of the supporting frame 5 (for example, the supporting frame 5 defines the supporting structure 10).

Secondly, the processing unit 9 comprises a processing device (not illustrated) and at least one contact element 4.

The processing device is configured to perform the processing operation on the object placed in the housing 3, when the supporting element 2 is at the processing station 7 located along the movement path. It should be emphasised that the processing device may be configured to perform any processing operation on the object placed in the housing 3.

In some embodiments, the processing device is an applying device which is configured to apply a film to the support, which is placed inside the housing 3.

In other embodiments, the processing device is an inserting device which is configured to insert a support into the housing 3, three-dimensionally forming it if necessary.

In yet other embodiments, the processing device is a placing device which is configured to place a product in a support, which is placed inside the housing 3.

However, it must be emphasised that such embodiments are only some of the possible embodiments and shall not be understood as limiting for this invention.

In contrast, the contact element 4 is removably mounted on the supporting structure 10 at least at the processing station 7, and defines a contact surface 11 which provides a contact and supports the supporting element 2 at least when the supporting element 2 is in the processing station 7 and the processing device performs the processing operation on the object.

In the preferred embodiments, the processing unit 9 comprises two contact elements 4, which are placed at the processing station 7 on opposite sides of the conveying device 6. That can be clearly seen in the accompanying figures. Moreover, preferably, each contact element 4 defines a respective contact surface 11. What is described below with reference to a generic contact element 4 shall be considered valid for both of the contact elements 4. Depending on the embodiments, the contact surfaces 11 of different contact elements 4 may or may not be coplanar and/or be placed at different heights.

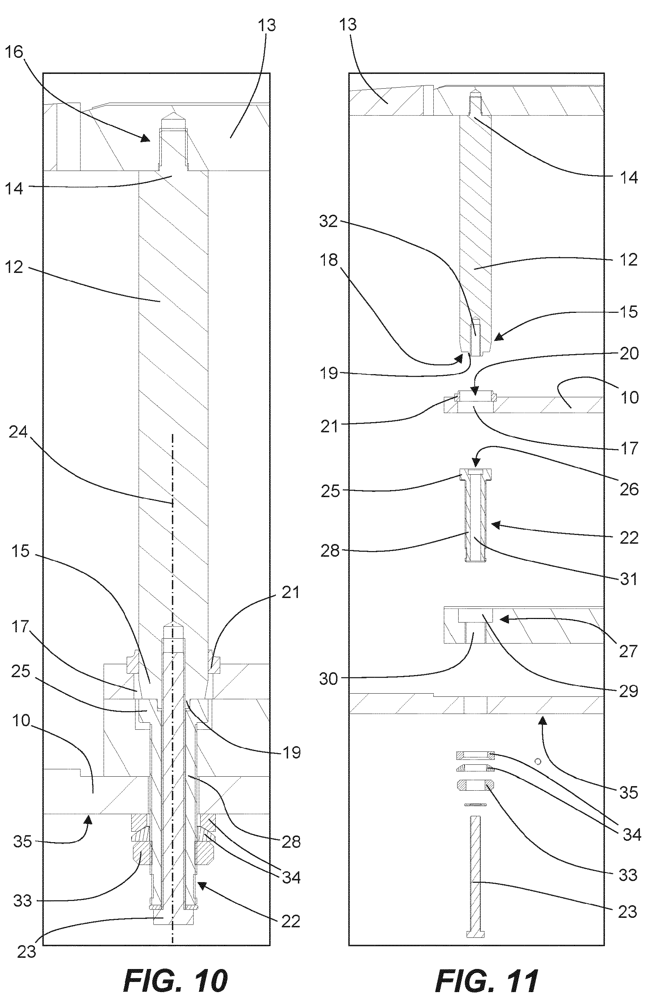

The contact element 4 comprises a supporting portion 12, by means of which it is mounted on the supporting structure 10, and advantageously a contact portion 13, which defines the contact surface 11. Preferably, the supporting portion 12 has an elongate shape (column-shaped in the embodiment illustrated in the accompanying figures) and extends between two ends: at a first end 14 (which is the upper end with reference to Figure 10), the supporting portion 12 is fixed to the contact portion 13, and at a second end 15 (which is the lower end with reference to Figure 10), the supporting portion 12 is mounted on the supporting structure 10 in ways which will be described below. In more detail, the first end 14 is advantageously threaded and is completely screwed into a threaded hole 16 made in the contact portion 13, whilst the second end 15 is inserted into an opening 17 (not threaded) made in the supporting structure 10. At the end portion of the second end 15, the supporting portion 12 has a supporting surface 18 and a projection 19 which projects, relative to the supporting surface 18, along a line of extension of the supporting portion 12.

Preferably, the opening 17 made in the supporting structure 10 has an inserting mouth 20 into which a bushing 21 is inserted, which is configured to house and to guide the supporting portion 12 inside the opening 17 and to, at least partly, hinder oscillations of the supporting portion 12.

In the preferred embodiments, the contact element 4 comprises a plurality of supporting portions 12 and a contact portion 13, with the supporting portions 12 fixed to the contact portion 13. Advantageously, the supporting portions 12 of a contact element 4 are distributed along the extent of the contact portion 13 and are positioned in such a way as to be arranged near each other in pairs, with the supporting portions 12 of each pair which are placed side by side transversally relative to the movement path. In the embodiment shown in the accompanying figures, each contact element 4 comprises a plurality of pairs (in particular, six pairs), with the pairs spaced apart according to a regular pitch.

Moreover, according to an innovative aspect of this invention, the processing unit 9 comprises an adjusting element 22 and a fixing element 23.

The adjusting element 22 is mounted on the supporting structure 10 and is adjustable relative to the supporting structure 10, along an adjusting line 24, to assume an operating position (clearly visible in the detail shown in Figure 10), which is between a first position and a second position. That operating position determines the position of the contact portion 13 and, consequently, an operating height of the contact surface 11, relative to a floor on which the processing unit 9 is positioned. The operating height of the contact surface 11 is between a maximum height, relative to the floor, and a minimum height, relative to the floor, with the contact surface 11 placed at the maximum height when the adjusting element 22 is in the first position, and with the contact surface 11 placed at the minimum height when the adjusting element 22 is in the second position. It should be emphasised that in the preferred embodiments, the adjusting line 24 (which is shown in Figure 10) is a straight line and, preferably, vertical (and perpendicular to the contact surface 11). The operating height of the contact surface 11 is therefore determined by the operating position assumed by the adjusting element 22. Indeed the contact element 4 is mounted on the supporting structure 10 by means of the supporting portion 12 which is removably coupled to the adjusting element 22. Advantageously, the contact element 4 is resting on the adjusting element 22. In particular, the contact element 4 is placed above the adjusting element 22 and each supporting portion 12 of the contact element 4 is resting on the respective adjusting element 22. In particular, the supporting surface 18 of the supporting portion 12 is resting on a supporting head 25 of the adjusting element 22. However, embodiments are also possible in which a further element is interposed between the supporting portion 12 and the adjusting element 22. Moreover, to guarantee improved centring between the contact element 4 and the adjusting element 22, as can be clearly seen in Figure 10, the projection 19 of the supporting portion 12 is advantageously inserted without lateral clearance, into a recess 26 made in the supporting head 25 of the adjusting element 22.

Advantageously, in some embodiments the position of the adjusting element 22 is adjustable relative to the supporting structure 10 by screwing the adjusting element 22 around the adjusting line 24. In such embodiments, the adjusting element 22 is threaded and the supporting structure 10 advantageously defines a receiving seat 27, which is also threaded, into which the adjusting element 22 is screwed.

In the preferred embodiments, the adjusting element 22 comprises, in addition to the supporting head 25, also a main body 28 which is made in one piece with the supporting head 25. In particular, it is the main body 28 of the adjusting element 22 which is threaded and which is screwed to the receiving seat 27, whilst the supporting head 25 is not threaded and is wider than the main body 28 relative to the adjusting line 24.

In more detail, in the embodiments in which the adjusting element 22 comprises both the main body 28 and the supporting head 25, the receiving seat 27 is advantageously substantially shaped like the adjusting element 22 and comprises a first compartment 29 with greater transversal dimension in which the supporting head 25 of the adjusting element 22 is received, and a second compartment 30 with smaller transversal dimension in which the main body 28 of the adjusting element 22 is received. In particular, the first compartment 29 is placed above the second compartment 30 (towards the contact element 4) and only the second compartment 30 is threaded.

Moreover, the adjusting element 22 has a first inserting hole 31 which is a through hole and which extends along an inserting line advantageously parallel to the adjusting line 24. In particular, the first inserting hole 31 extends for the entire extent of the adjusting element 22, both through the supporting head 25 and through the main body 28. Preferably, the first inserting hole 31 is a hole that is not threaded.

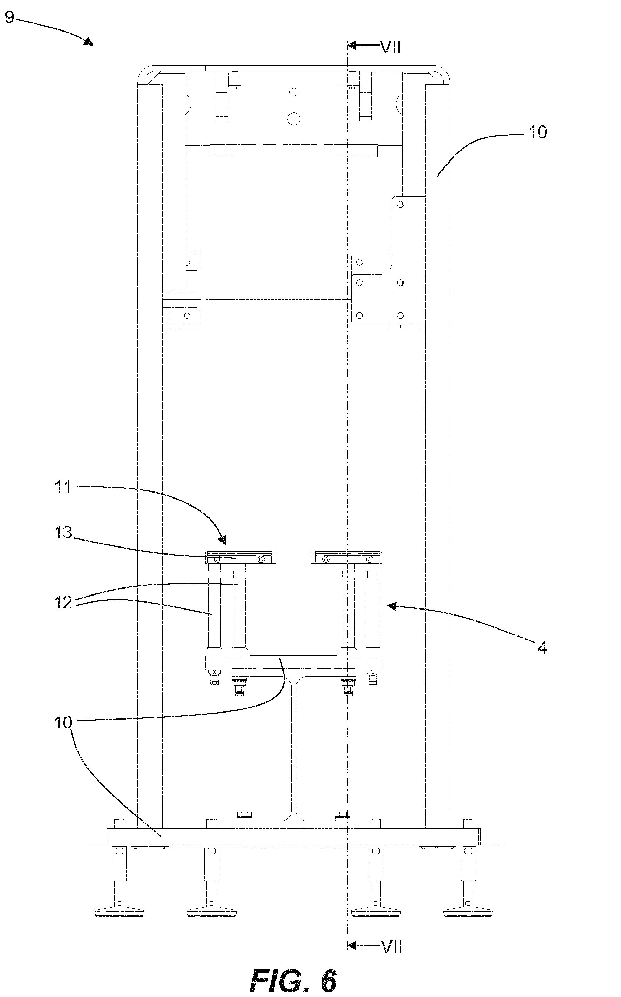

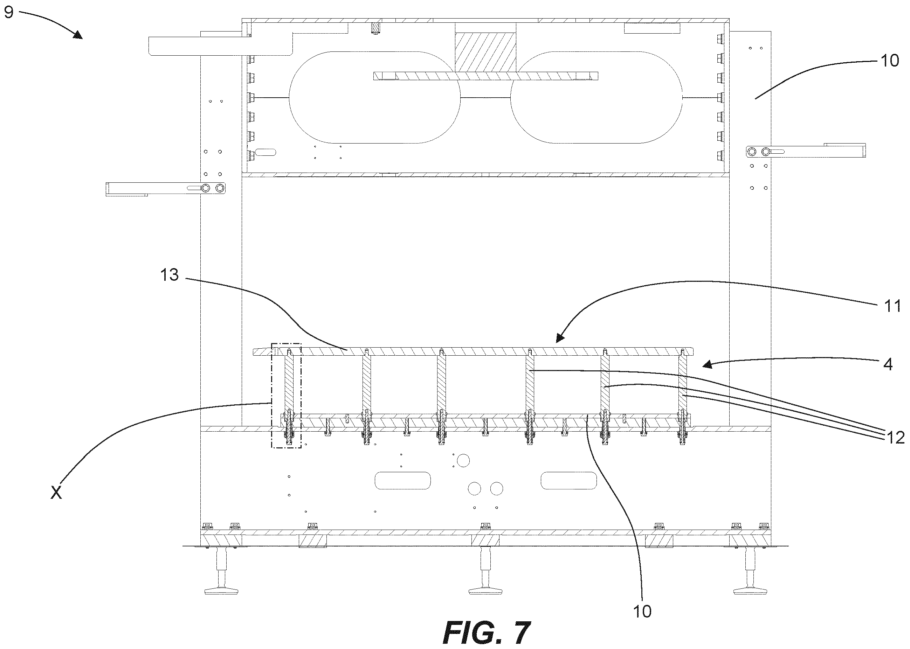

The fixing element 23 is switchable between an operating configuration and a non-operating configuration. In the operating configuration, the fixing element 23 is coupled to the contact element 4 and constrains the contact element 4 to the supporting structure 10 in order to keep the contact surface 11 fixed at the operating height, which is determined by the adjusting element 22 with which the contact element 4 is in contact. In contrast, in the non-operating configuration, the fixing element 23 is uncoupled from the contact element 4 and allows both removal of the contact element 4 from the supporting structure 10, and uncoupling of the contact element 4 from the adjusting element 22. In Figures 6 and 7 the fixing element 23 is in the operating configuration and the contact surface 11 is at the operating height. Advantageously, when the fixing element 23 is in the operating configuration, the fixing element 23 is mounted between the contact element 4 and the adjusting element 22 and constrains the contact element 4 to the adjusting element 22. In the preferred embodiments, in which the adjusting element 22 has the first inserting hole 31, the contact element 4 has a second inserting hole 32 which is threaded and the fixing element 23 is also threaded. Moreover, when the fixing element 23 is in the operating configuration, the second inserting hole 32 is advantageously aligned with the first inserting hole 31 along the inserting line, with the fixing element 23 inserted into the first inserting hole 31 and screwed to the second inserting hole 32.

In the preferred embodiments, such as that shown in the accompanying figures, the adjusting line 24 and the inserting line are coincident with each other. In particular, both the adjusting line 24 and the inserting line are straight lines and, advantageously, are vertical. In more detail, the adjusting line 24 and the inserting line are preferably perpendicular to the contact surface 11. In the embodiment illustrated in the accompanying figures, the processing unit 9 also comprises a locking element 33 which is coupled to the adjusting element 22 and which is switchable between a locking configuration and an unlocking configuration. In the locking configuration, the locking element 33 hinders an adjustment of the adjusting element 22 along the adjusting line 24. In contrast, in the unlocking configuration, the locking element 33 allows a free adjustment of the adjusting element 22 along the adjusting line 24. In other words, when the locking element 33 is in the locking configuration, the adjusting element 22 is kept substantially fixed relative to the supporting structure 10 and cannot be screwed to the receiving seat 27 to adjust its position relative to the supporting structure 10 along the adjusting line 24, whilst when the locking element 33 is in the unlocking configuration, the adjusting element 22 can be screwed to the receiving seat 27 to adjust its position relative to the supporting structure 10 along the adjusting line 24. Advantageously, the locking element 33 is screwable to the adjusting element 22 which is advantageously threaded. In particular, the locking element 33 is screwable to the main body 28 of the adjusting element 22. Preferably, the locking element 33 comprises, or is constituted of, a nut and its operation relative to the screwing of the main body 28 in the receiving seat 27 made in the supporting structure 10 is similar to that of a common lock nut relative to the screwing of a screw of a bolt in the relative nut.

In the embodiments in which the processing unit 9 comprises the locking element 33, it operates between the adjusting element 22 and a base surface 35 of the supporting structure 10 in the locking configuration. In some embodiments, the processing unit 9 advantageously comprises at least one compensating element 34 which is interposed between the base surface 35 of the supporting structure 10 and the locking element 33. The compensating element 34 has a shape such that it compensates for any irregular development of said base surface 35 (where irregular development may even be understood to be only a planarity less than that of the contact surface 11). That allows avoidance of precision processing of the base surface 35, processing which would be necessary if the locking element 33 were in direct contact with the base surface 35 in order to guarantee, in the locking configuration, hindrance of adjustment of the adjusting element 22 along the adjusting line 24. Advantageously, the compensating element 34 comprises a washer. Preferably, the compensating element 34 comprises a concave washer and a convex washer which are coupled to each other.

In the preferred embodiments, such as that shown in the accompanying figures, the contact element 4 comprises a plurality of supporting portions 12 and the processing unit 9 comprises a corresponding plurality of adjusting elements 22. In particular, in the embodiments in which the contact element 4 comprises multiple supporting portions 12, each supporting portion 12 is coupled, as previously described, to a respective adjusting element 22. Moreover, what was previously described for one adjusting element 22 shall be considered valid for each adjusting element 22. Each adjusting element 22 is also adjustable independently of the others.

This invention brings important advantages.

Thanks to this invention it has been possible to provide an apparatus for performing a processing operation on an object wherein the presence of the contact elements is less of a hindrance to performing maintenance, mounting or demounting operations than is the case in prior art apparatuses.

Furthermore, thanks to this invention it has been possible to provide an apparatus for performing a processing operation on an object wherein it is possible to adjust the contact elements only once, without the need to do it again every time it is necessary to remove them from the apparatus in order to perform maintenance, mounting or demounting operations.

Finally, it should be noticed that this invention is relatively easy to produce and that even the cost linked to implementing the invention is not very high. The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. An apparatus for performing a processing operation on an object, comprising:
a supporting frame (5);
a conveying device (6), which defines a movement path;
a supporting element (2) which is coupled to the conveying device (6) and which is moved by the conveying device (6) along the movement path relative to the supporting frame (5), the supporting element (2) defining a housing (3) configured to house, in use, the object; and
a processing unit (9) which is associated with the movement path;
the processing unit (9) comprising:
a supporting structure (10);
a processing device, which is configured to perform, in use, the processing operation on the object placed in the housing (3), when the supporting element (2) is at a processing station (7) located along the movement path;
at least one contact element (4), removably mounted on the supporting structure (10) at least at the processing station (7), which defines a contact surface (11) which provides a contact and supports the supporting element (2) when the supporting element (2) is in the processing station (7) and the processing device performs, in use, said processing operation on the object; the processing unit (9) also comprising an adjusting element (22) and a fixing element (23), wherein:
the adjusting element (22) is mounted on the supporting structure (10) and is adjustable relative to it along an adjusting line (24), to assume an operating position which is comprised between a first position and a second position;
the at least one contact element (4) is mounted on the supporting structure (10) by means of a supporting portion (12) which is removably coupled to the adjusting element (22), the operating position of the adjusting element (22) determining an operating height of the contact surface (11) relative to a floor on which the processing unit (9) is positioned, the operating height being between a maximum height, relative to the floor, and a minimum height, relative to the floor;
the contact surface (11) is placed at the maximum height, when the adjusting element (22) is in the first position, and at the minimum height, when the adjusting element (22) is in the second position; and
the fixing element (23) is switchable between an operating configuration, in which it is coupled to the at least one contact element (4) and constrains the at least one contact element (4) to the supporting structure (10) in order to keep the contact surface (11) fixed at the operating height determined by the adjusting element (22), and a non-operating configuration, in which it is uncoupled from the at least one contact element (4) and allows removal of the at least one contact element (4) from the supporting structure (10) and uncoupling of the at least one contact element (4) from the adjusting element (22).

2. The apparatus according to claim 1, wherein the at least one contact element (4) is resting on the adjusting element (22).

3. The apparatus according to claim 1 or 2, wherein the adjusting element (22) is threaded and the supporting structure (10) defines a threaded receiving seat (27) in which the adjusting element (22) is screwed, the adjusting element (22) being adjustable relative to the supporting structure (10) by screwing around the adjusting line (24).

4. The apparatus according to any one of claims 1 to 3, wherein, when the fixing element (23) is in the operating configuration, the fixing element (23) is mounted between the at least one contact element (4) and the adjusting element (22) and constrains the at least one contact element (4) to the adjusting element (22).

5. The apparatus according to claim 4, wherein:
the adjusting element (22) has a first inserting hole (31) which is a through hole and which extends along an inserting line;
the at least one contact element (4) has a second inserting hole (32) which is threaded;
the fixing element (23) is threaded; and
when the fixing element (23) is in the operating configuration, the second inserting hole (32) is aligned with the first inserting hole (31) along the inserting line, the fixing element (23) is inserted into the first inserting hole (31) and is screwed to the second inserting hole (32).

6. The apparatus according to claim 4 or 5 when it depends on 3, wherein the adjusting line (24) and the inserting line are coincident with each other.

7. The apparatus according to any one of claims 1 to 6, wherein the processing unit (9) also comprises a locking element (33) which is coupled to the adjusting element (22) and which is switchable between a locking configuration in which it hinders an adjustment of the adjusting element (22) along the adjusting line (24) and an unlocking configuration in which it allows a free adjustment of the adjusting element (22) along the adjusting line (24).

8. The apparatus according to claim 7, wherein the locking element (33) in the locking configuration operates between the adjusting element (22) and a base surface (35) of the supporting structure (10).

9. The apparatus according to claim 8, wherein the processing unit (9) also comprises at least one compensating element (34) which is interposed between the base surface (35) of the supporting structure (10) and the locking element (33), and wherein the at least one compensating element (34) has a shape such that it compensates for an irregular development of said base surface (35).

10. The apparatus according to any one of claims 1 to 9, wherein the processing unit (9) comprises a plurality of adjusting elements (22) and wherein the at least one contact element (4) comprises a plurality of supporting portions (12), each supporting portion (12) of said plurality of supporting portions (12) being coupled to a respective adjusting element (22) of said plurality of adjusting elements (22).

11. The apparatus according to any one of claims 1 to 10, wherein the processing unit (9) comprises two contact elements (4) which are placed at opposite sides of the conveying device (6) at least at the processing station (7), each contact element (4) defining a respective contact surface (11), wherein moreover the processing unit (9) comprises two adjusting elements (22), which are each coupled to one of the two contact elements (4), the two adjusting elements (22) being adjustable independently of each other.

## Patentansprüche

1. Eine Vorrichtung zur Durchführung eines Verarbeitungsvorgangs an einem Objekt, Folgendes beinhaltend:
einen Trägerrahmen (5)
eine Fördervorrichtung (6), die einen Bewegungsweg definiert; ein Trägerelement (2), das an die Fördervorrichtung (6) gekoppelt ist und das von der Fördervorrichtung (6) auf dem Bewegungsweg im Verhältnis zum Trägerrahmen (5) bewegt wird; das Trägerelement (2) definiert dabei ein Gehäuse (3), das dazu ausgelegt ist, im Gebrauch das Objekt aufzunehmen; und
eine Verarbeitungseinheit (9), die mit dem Bewegungsweg verbunden ist; die Verarbeitungseinheit (9) beinhaltet dabei: eine Trägerstruktur (10);
ein Verarbeitungsgerät, das dazu ausgelegt ist, im Gebrauch den Verarbeitungsvorgang an dem Objekt, das im Gehäuse (3) platziert ist, durchzuführen, wenn das Trägerelement (2) in einer Verarbeitungsstation (7) ist, die auf dem Bewegungsweg liegt;
mindestens ein Kontaktelement (4), das zumindest an der Verarbeitungsstation (7) abnehmbar an der Trägerstruktur (10) montiert ist, das eine Kontaktfläche (11) definiert, die einen Kontakt bietet und das Trägerelement (2) trägt, wenn das Trägerelement (2) in der Verarbeitungsstation (7) ist und das Verarbeitungsgerät im Gebrauch besagten Verarbeitungsvorgang am Objekt durchführt; die Verarbeitungseinheit (9) beinhaltet dabei auch ein Justierelement (22) und ein Befestigungselement (23), wobei
das Justierelement (22) an der Trägerstruktur (10) montiert ist und im Verhältnis dazu auf einer Justierlinie (24) regulierbar ist, um eine Betriebsposition einzunehmen, die zwischen einer ersten Position und einer zweiten Position inbegriffen ist;
das mindestens eine Kontaktelement (4) ist mithilfe eines Trägerabschnitts (12), der abnehmbar an das Justierelement (22) gekoppelt ist, an der Trägerstruktur (10) montiert, die Betriebsposition des Justierelements (22) bestimmt dabei eine Betriebshöhe der Kontaktfläche (11) im Verhältnis zu einem Boden, auf dem die Verarbeitungseinheit (9) steht, die Betriebshöhe liegt dabei zwischen einer maximalen Höhe im Verhältnis zu dem Boden und einer Mindesthöhe im Verhältnis zu dem Boden;
die Kontaktfläche (11) befindet sich auf der maximalen Höhe, wenn das Justierelement (22) in der ersten Position ist, und auf der Mindesthöhe, wenn das Justierelement (22) in der zweiten Position ist; und
das Befestigungselement (23) ist zwischen einer Betriebsanordnung, in der es an das mindestens eine Kontaktelement (4) gekoppelt ist und das mindestens eine Kontaktelement (4) an der Trägerstruktur (10) festhält, um die Kontaktfläche (11) auf der Betriebshöhe, die durch das Justierelement (22) bestimmt ist, zu fixieren, und einer Ruheanordnung, in der es von dem mindestens einen Kontaktelement (22) abgekoppelt ist und das Entfernen des mindestens einen Kontaktelements (4) von der Trägerstruktur (10) und das Abkoppeln des mindestens einen Kontaktelements (4) von dem Justierelement (22) erlaubt, umschaltbar.

2. Die Vorrichtung nach dem Patentanspruch 1, wobei das mindestens eine Kontaktelement (4) auf dem Justierelement (22) aufliegt.

3. Die Vorrichtung nach dem Patentanspruch 1 oder 2, wobei das Justierelement (22) ein Gewinde hat und die Trägerstruktur (10) einen Aufnahmesitz mit Gewinde (27) definiert, in den das Justierelement (22) eingeschraubt wird, das Justierelement (22) ist dabei im Verhältnis zur Trägerstruktur (10) regulierbar, indem es um die Justierlinie (24) verschraubt wird.

4. Die Vorrichtung nach jedem der Patentansprüche 1 bis 3, wobei, wenn das Befestigungselement (23) in der Betriebsanordnung ist, das Befestigungselement (23) zwischen dem mindestens einen Kontaktelement (4) und dem Justierelement (22) montiert ist und das mindestens eine Kontaktelement (4) am Justierelement (22) festhält.

5. Die Vorrichtung nach dem Patentanspruch 4, wobei:
das Justierelement (22) eine erste Einführöffnung (31) hat, die eine Durchgangsbohrung ist und die sich auf einer Einführungslinie erstreckt;
das mindestens eine Kontaktelement (4) eine zweite Einführöffnung (32) hat, die ein Gewinde hat, das Befestigungselement (23) ein Gewinde hat; und
wenn sich das Befestigungselement (23) in der Betriebskonfiguration befindet, die zweite Einführöffnung (32) auf der Einführlinie mit der ersten Einführöffnung (31) gefluchtet ist, das Befestigungselement (23) in die erste Einführöffnung (31) eingeführt wird und an der zweiten Einführöffnung (32) angeschraubt wird.

6. Die Vorrichtung nach dem Patentanspruch 4 oder 5, wenn er von 3 abhängt, wobei die Justierlinie (24) und die Einführlinie miteinander übereinstimmen.

7. Die Vorrichtung nach jedem der Patentansprüche 1 bis 6, wobei die Verarbeitungseinheit (9) auch ein Verriegelungselement (33) beinhaltet, das am Justierelement (22) angekoppelt ist und das zwischen einer Verriegelungsanordnung, in der es eine Regulierung des Justierelements (22) auf der Justierlinie (24) verhindert, und einer Entriegelungsanordnung, in der es eine freie Regulierung des Justierelements (22) auf der Justierlinie (24) erlaubt, umschaltbar ist.

8. Die Vorrichtung nach dem Patentanspruch 7, wobei das Verriegelungselement (33) in der Verriegelungsanordnung zwischen dem Justierelement (22) und einer Basisfläche (35) der Trägerstruktur (10) wirkt.

9. Die Vorrichtung nach dem Patentanspruch 8, wobei die Verarbeitungseinheit (9) auch mindestens ein Ausgleichselement (34) beinhaltet, das sich zwischen der Basisfläche (35) der Trägerstruktur (10) und dem Verriegelungselement (33) befindet, und wobei das mindestens eine Ausgleichselement (34) solch eine Form hat, dass es eine ungleichmäßige Ausdehnung besagter Basisfläche (35) ausgleicht.

10. Die Vorrichtung nach jedem der Patentansprüche 1 bis 9, wobei die Verarbeitungseinheit (9) eine Mehrzahl von Justierelementen (22) beinhaltet und wobei das mindestens eine Kontaktelement (4) eine Mehrzahl von Trägerabschnitten (12) beinhaltet, jeder Trägerabschnitt (12) der besagten Mehrzahl von Trägerabschnitten (12) ist dabei an ein jeweiliges Justierelement (22) der besagten Mehrzahl von Justierelementen (22) gekoppelt.

11. Die Vorrichtung nach jedem der Patentansprüche 1 bis 10, wobei die Verarbeitungseinheit (9) zwei Kontaktelemente (4) beinhaltet, die an gegenüberliegenden Seiten der Fördervorrichtung (6) platziert sind, zumindest in der Verarbeitungsstation (7), jedes Kontaktelement (4) definiert dabei eine jeweilige Kontaktfläche (11), wobei darüber hinaus die Verarbeitungseinheit (9) zwei Justierelemente (22) beinhaltet, von denen jedes an eines der zwei Kontaktelemente (4) gekoppelt ist, die zwei Justierelemente (22) sind dabei unabhängig voneinander regulierbar.

## Revendications

1. Un appareil pour effectuer une opération de traitement sur un objet, comprenant :
un châssis de support (5) ;
un dispositif de transport (6), qui définit un parcours de déplacement ;
un élément de support (2) qui est accouplé avec le dispositif de transport (6) et qui est déplacé par le dispositif de transport (6) le long du parcours de déplacement par rapport au châssis de support (5), l'élément de support (2) définissant un logement (3) configuré pour loger, en utilisation, l'objet ; et
une unité de traitement (9) qui est associée avec le parcours de déplacement ;
l'unité de traitement (9) comprenant :
une structure de support (10) ;
un dispositif de traitement, qui est configuré pour effectuer, en utilisation, l'opération de traitement sur l'objet placé dans le logement (3), lorsque l'élément de support (2) est au niveau d'une station de traitement (7) située le long du parcours de déplacement ;
au moins un élément de contact (4), monté de façon amovible sur la structure de support (10) au moins au niveau de la station de traitement (7), qui définit une surface de contact (11) qui fournit un contact et soutient l'élément de support (2) lorsque l'élément de support (2) est dans la station de traitement (7) et que le dispositif de traitement effectue, en utilisation, ladite opération de traitement sur l'objet ;
l'unité de traitement (9) comprenant également un élément de réglage (22) et un élément de fixation (23), où :
l'élément de réglage (22) est monté sur la structure de support (10) et peut être réglé par rapport à celle-ci le long d'une direction de réglage (24), pour prendre une position opérationnelle qui est comprise entre une première position et une deuxième position ;
ledit au moins un élément de contact (4) est monté sur la structure de support (10) au moyen d'une portion de support (12) qui est accouplée de façon amovible avec l'élément de réglage (22), la position opérationnelle de l'élément de réglage (22) déterminant une hauteur opérationnelle de la surface de contact (11) par rapport à un sol sur lequel l'unité de traitement (9) est positionnée, la hauteur opérationnelle étant comprise entre une hauteur maximale, par rapport au sol, et une hauteur minimale, par rapport au sol ;
la surface de contact (11) est placée à la hauteur maximale, lorsque l'élément de réglage (22) est dans la première position, et à la hauteur minimale, lorsque l'élément de réglage (22) est dans la deuxième position ; et
l'élément de fixation (23) peut être commuté entre une configuration opérationnelle, dans laquelle il est accouplé avec ledit au moins un élément de contact (4) et assujettit ledit au moins un élément de contact (4) à la structure de support (10) de manière à maintenir la surface de contact (11) fixe à la hauteur opérationnelle déterminée par l'élément de réglage (22), et une configuration non opérationnelle, dans laquelle il est désaccouplé dudit au moins un élément de contact (4) et permet le retrait dudit au moins un élément de contact (4) de la structure de support (10) et le désaccouplement dudit au moins un élément de contact (4) de l'élément de réglage (22).

2. L'appareil selon la revendication 1, dans lequel ledit au moins un élément de contact (4) est en appui sur l'élément de réglage (22).

3. L'appareil selon la revendication 1 ou 2, dans lequel l'élément de réglage (22) est fileté et la structure de support (10) définit un siège de réception (27) fileté dans lequel l'élément de réglage (22) est vissé, l'élément de réglage (22) pouvant être réglé par rapport à la structure de support (10) par vissage autour de la direction de réglage (24).

4. L'appareil selon l'une quelconque des revendications de 1 à 3, dans lequel, lorsque l'élément de fixation (23) est dans la configuration opérationnelle, l'élément de fixation (23) est monté entre ledit au moins un élément de contact (4) et l'élément de réglage (22) et assujettit ledit au moins un élément de contact (4) à l'élément de réglage (22).

5. L'appareil selon la revendication 4, dans lequel :
l'élément de réglage (22) a un premier trou d'insertion (31) qui est un trou traversant et qui s'étend le long d'une direction d'insertion ;
ledit au moins un élément de contact (4) a un deuxième trou d'insertion (32) qui est fileté ;
l'élément de fixation (23) est fileté ; et
lorsque l'élément de fixation (23) est dans la configuration opérationnelle, le deuxième trou d'insertion (32) est aligné avec le premier trou d'insertion (31) le long de la direction d'insertion, l'élément de fixation (23) est inséré dans le premier trou d'insertion (31) et est vissé au deuxième trou d'insertion (32).

6. L'appareil selon la revendication 4 ou 5 lorsque dépendant de la revendication 3, dans lequel la direction de réglage (24) et la direction d'insertion sont coïncidentes entre elles.

7. L'appareil selon l'une quelconque des revendications de 1 à 6, dans lequel l'unité de traitement (9) comprend également un élément de blocage (33) qui est accouplé avec l'élément de réglage (22) et qui peut être commuté entre une configuration de blocage dans laquelle il empêche un réglage de l'élément de réglage (22) le long de la direction de réglage (24) et une configuration de déblocage dans laquelle il permet un réglage libre de l'élément de réglage (22) le long de la direction de réglage (24).

8. L'appareil selon la revendication 7, dans lequel l'élément de blocage (33) dans la configuration de blocage agit entre l'élément de réglage (22) et une surface de base (35) de la structure de support (10).

9. L'appareil selon la revendication 8, dans lequel l'unité de traitement (9) comprend également au moins un élément de compensation (34) qui est interposé entre la surface de base (35) de la structure de support (10) et l'élément de blocage (33), et dans lequel ledit au moins un élément de compensation (34) a une forme telle qu'il compense un développement irrégulier de ladite surface de base (35).

10. L'appareil selon l'une quelconque des revendications de 1 à 9, dans lequel l'unité de traitement (9) comprend une pluralité d'éléments de réglage (22) et dans lequel ledit au moins un élément de contact (4) comprend une pluralité de portions de support (12), chaque portion de support (12) de ladite pluralité de portions de support (12) étant accouplée avec un élément de réglage (22) respectif de ladite pluralité d'éléments de réglage (22).

11. L'appareil selon l'une quelconque des revendications de 1 à 10, dans lequel l'unité de traitement (9) comprend deux éléments de contact (4) qui sont placés au niveau de côtés opposés du dispositif de transport (6) au moins au niveau de la station de traitement (7), chaque élément de contact (4) définissant une surface de contact (11) respective, dans lequel, en outre, l'unité de traitement (9) comprend deux éléments de réglage (22), qui sont chacun accouplés avec l'un des deux éléments de contact (4), les deux éléments de réglage (22) pouvant être réglés indépendamment l'un de l'autre.
